# EUROPÄISCHE PATENTSCHRIFT

(11) **EP 3 366 389 B1**
(45) Veröffentlichungstag und Bekanntmachung des Hinweises auf die Patenterteilung: **10.01.2024**
(21) Anmeldenummer: 18157076.3
(22) Anmeldetag: 16.02.2018
(51) Int. Cl.: B22D 19/00, B22F 7/08, C22C 33/02, C22C 37/00, C22C 37/04, C04B 41/00, C04B 41/45, C04B 41/88, B22D 19/02, C22C 1/08, B22F 7/00, B22F 5/00, B22F 7/06, C04B 111/00

(54) **VERBUNDWERKSTOFFE MIT SEHR HOHER VERSCHLEISSBESTÄNDIGKEIT**
COMPOSITES WITH VERY HIGH WEAR RESISTANCE
MATÉRIAUX COMPOSITES À RÉSISTANCE À L'USURE TRÈS ÉLEVÉE

(30) Priorität: 24.02.2017 DE 102017203076
(43) Veröffentlichungstag der Anmeldung: 29.08.2018
(73) Patentinhaber: Fraunhofer-Gesellschaft zur Förderung der angewandten Forschung e.V., 80686 München (DE); Walzengießerei Coswig GmbH, 01640 Coswig (DE)
(72) Erfinder: STANDKE, Gisela, 01099 Dresden (DE); ADLER, Jörg, 01662 Meißen (DE); FÜSSEL, Alexander, 01069 Dresden (DE); NELLE, Stefan, 04910 Elsterwerda (DE); FÜSSEL, Thomas, 01458 Ottendorf-Okrilla (DE)
(74) Vertreter: Rauschenbach, Marion

(56) Entgegenhaltungen:
- WO-A1-94/10354
- DE-A1- 1 953 481
- DE-A1- 2 704 702
- DE-A1-102008 032 271
- US-A1- 2010 247 840

## Beschreibung

Die Erfindung bezieht sich auf die Gebiete der Metallurgie und Keramik betrifft Verbundwerkstoffe mit sehr hoher Verschleißbeständigkeit, wie sie beispielsweise für produktberührte Teile von Bergbau-, Misch- und Aufbereitungsanlagen, im Abbau, Transport und der Weiterverarbeitung von Erzen, Mineralien und Kohlen oder in Anlagen für die Zementherstellung zum Einsatz kommen können.

Der werkstoffliche Aufbau hoch verschleißbeanspruchter Bauteile in der Bergbau- und Aufbereitungstechnik richtet sich insbesondere nach der Anlagenart und der damit verbundenen konstruktiven Lösung. Aber auch Fragen der Zerkleinerung spielen bei der Auswahl eine wichtige Rolle, wie die Geschwindigkeit, die Art und die Form des Gutes und/oder die Standzeiten der Anlagen.

Für die verschleißbeanspruchten Bauteile werden bisher besonders hochfeste Materialien eingesetzt, wobei aufgrund der extremen Schlag- und Scherbeanspruchung zunächst nur Metalle infrage kommen, die teilweise mit Hartmetall- oder Keramikpanzerung, aufgeschrumpften Bandagen oder auswechselbaren Segmenten (Hanstein, Th.: Beitrag zur Erhöhung der Standzeit der Arbeitsorgane von Gutbett-Walzenmühlen, Dissertation TU Bergakademie Freiberg 2001) versehen sind, welche ebenfalls vergleichsweise schnell abgearbeitet sind und dann ersetzt werden müssen. Häufig werden beispielweise Hämmer, Zähne oder Bohrer aufgrund ihrer hohen mechanischen Belastung aus vergleichsweise zähen Stählen gefertigt, welche anschließend mit Aufschweißungen oder Einlegesegmenten aus Hartmetallen versehen werden, die in Abhängigkeit von der Abnutzung immer wieder neu aufgebracht werden müssen. Dies erhöht den Aufwand, insbesondere an aufwändiger Schweißtechnik, erheblich. Mühlensegmente mit Mahlbahnen, Mahlkörpern oder Walzen sind häufig Gussbauteile, welche aus verschleißbeständigem Guss ausgeführt werden, welcher häufig mit Chrom, Nickel, Molybdän oder Mangan legiert wird. Bekannte Vertreter solcher legierten Gusszusammensetzungen sind Nihard, ein Chrom-Nickel legiertes weiß erstarrtes Gusseisen, Chromhartguss mit Kohlenstoffgehalten <= 3 % und Chromgehalten < 30 %, Manganhartstahl mit Kohlenstoffgehalten von 1,2 % und einem Mangangehalt von 12 % (DIN EN 12513 "Verschleißbeständiges Gusseisen").

All diese Werkstoffe haben gemein, dass der Kohlenstoff, nicht wie bei klassischem grauem Gusseisen, in Form von Lamellen oder Kugeln vorliegt, sondern in Form von Carbiden gebunden ist. Trotz dieses hohen Anteils an Carbiden im Gefüge nutzen sich die verschleißfesten Gusswerkzeuge in Abhängigkeit von der Art des Mahlgutes in der Mahlzone relativ schnell ab, was mit unbefriedigenden Standzeiten einhergeht. Dies führt zu erheblichen Kosten durch das Vorhalten von teuren Ersatzteilen, Stillstandszeiten für den Wechsel und kann auch Einschränkungen durch eine veränderliche Qualität des Mahlgutes bedeuten. Aus diesem Grund sind seit vielen Jahren verschiedene Entwicklungen bekannt, diese Bauteile aus Verbundwerkstoffen auszuführen und somit die Laufzeiten zu erhöhen.

Bei einem industriell stark genutzten Verfahren werden beim Gießen von Bauteilen poröse Vorformen (Preformen) aus groben Keramik- oder Hartmetallpartikeln in die späteren stark verschleißbeanspruchten Zonen eingelegt und mit einem Gussmetall so infiltriert, dass die Poren in der Preform vollständig gefüllt sind. Es entsteht somit ein Verbund aus Metall und Keramik, wobei in der Anwendung die Keramik nun die verschleißfeste Komponente und das Metall die fixierende, verformbare Komponente darstellt. Als Keramik wird eine poröse Preform beschrieben, welche aus Partikeln mit 20-80 % Aluminiumoxid und 80-20 % Zirkoniumoxid besteht und über Elektrofusion, Sintern oder Flammenspritzen hergestellt oder nur mit Bindern verbunden ist. Der Volumenanteil an Keramik wird mit 35-85 Volumenprozent beschrieben. Als Gießverfahren wird klassischer Schwerkraftguss oder Zentrifugalguss genannt. Diese Lösungen sind insbesondere in Bezug auf Aufbereitungsmühlen in verschiedenen Ausführungsformen unter dem Markennamen Xwin^{®} und neoX^{®} mit Keramikpreformen bekannt (WO98/15373) und wird hauptsächlich in Magotteaux-Mühlen eingesetzt.

Nachteilig bei diesen Lösungen ist, dass die vorherige Herstellung der Keramik in der porösen Preform aufwändig und teuer ist und diese Preformen aufgrund ihres Zustandes eine unzureichende Thermoschockbeständigkeit für die Füllung mit dem flüssigen Metall aufweisen.

In der DE 20 2007 004 774 U1 werden keramische Metallmatrix-Verbundstoffe beschrieben, bei denen der keramische Kuchen aus keramischen Körnern aus Aluminiumoxid und Borcarbid, Siliciumcarbid oder Wolframcarbid besteht. Der keramische Kuchen wird mit Metall imprägniert.

Der Einsatz poröser Hartmetall-Preformen wird in der DE 10 2008 032 271 B4 zur Herstellung von Verbundmaterialien angegeben. Die chemische Zusammensetzung der Hartmetalle ist 92-80 % W, Ti, Ta, Nb, V, Mo, Cr in einer Mischung mit 8-20 % Co oder 85-60 % der gleichen Carbide/Oxide/Nitride und 15-40 % Ni (alles Ma.-%). Hergestellt werden diese Hartmetalle mittels eines Elektronenstrahlschmelzverfahrens mit generativer Formgebung.

Dagegen wird bei Mühlen der Firma Köppern eine Panzerung der verschleißbeanspruchten Bauteile eingesetzt. Dafür werden Hartmetalle, wie Wolframcarbid, Titancarbid oder Chromcarbid, mit einer Korngröße von > 100 µm und bis zu einem Volumenanteil von 50 % in einer Mischung von Stahlpulver (z.B. 56 NiCrMoV7) mittels pulvermetallurgischer Verfahren zu Bauteilen verpresst, wobei Zonen mit hexagonaler Struktur in größerer Menge und diese Zonen umgebende Zonen aus Hartmetall in geringerer Menge gibt, wobei die Hartmetallzonen für die duktilen Eigenschaften des Materials verantwortlich sind. So hergestellte Bauteile, oft in Kachelform, können mittels Diffusionsschweißens auf die zu verstärkenden Bereiche aus Werkzeugstahl der verschleißbeanspruchten Bauteile aufgebracht werden. Danach erfolgt eine finale Wärmebehandlung, bei der sowohl der Werkzeugstahl als auch die Hartmetalle ihre finalen Eigenschaften erhalten. Diese Panzerung auf den Bauteilen ist als Hexadur^{®} der Firma Köppern bekannt (Schumacher, M., Theisen W.: Hexadur® - A novel wear protection of high-pressure roller presses for comminution; Maschinenfabrik KöppernGmbH & Co.KG., No. 11,5). Nachteilig an dieser Lösung ist, dass die Herstellung durch die vielen Prozessschritte sehr aufwändig ist und bei während des Einsatzes entstehende Fehlstellen oder Abplatzungen nicht reparabel ist.

Gemäß der WO 2004/043875 A2 wird ein Verbundmaterial aus Keramik und Metall oder Metall und Keramik beschrieben, wobei die keramischen Anteile aus Oxiden oder Mischoxiden, wie Al₂O₃, MgO, SiO₂, TiO₂, ZrO₂, Cr₂O₃ oder Y₂O₃, bestehen, die wiederum mit Carbiden, Nitriden oder Boriden, vermischt werden können. Zusätzlich wird Ti und/oder Cr mit maximal 25 Gew.-% als Aktivatoren für die Infiltration der Metalllegierungen der Metalllegierungen zugegeben. Zur Infiltration werden Eisenbasis- oder Nickelbasis-Legierungen verwendet. Die Verbundherstellung erfolgt durch Gießen des Metalls in die Keramik und Infiltration im Vakuum, drucklos oder bei leichtem bis mittlerem Druck.

Der Nachteil dieses Verfahren besteht in der Notwendigkeit des Einsatzes eines Aktivators, da sonst keine ausreichend gute und schnelle Infiltration und vor allem keine Spontaninfiltration stattfinden kann.

Weiter ist ein Verfahren zur Infiltration von SiC-Preformen mit einem Durchmesser von 50 mm und einer Höhe von 4-6 mm und einer Partikelgröße von 750 µm bekannt, welches mit Grauguss mit Kugelgraphit und 2,5-3 Ma.-% Si infiltriert wird. Die Herstellung erfolgt über vakuumunterstützten Sandguss (Asano, K et al, Int. J. of Cast Metals Res. 2008, Vol. 21, No 1-4, page 209-213). Zur Porosierung der Preformen werden dem SiC Kunststoffkugeln zugegeben, um einen Volumenanteil der Keramik in der Preform von 20-50 % zu erhalten. Beste Ergebnisse wurden mit 30 Vol.-% Keramik, 4 mm Preformhöhe und 2,5 % Siliciumanteil im Gusseisen erreicht. Trotz Vakuumunterstützung konnte aber keine der Preformen vollständig gefüllt werden. Gleichzeitig wurden Eisensilicid-Reaktionsprodukte an der Grenzfläche von Keramik und Metall festgestellt, die sich nachteilig auf die Eigenschaften des Bauteiles auswirken. Das Gefüge der Metallmatrix enthält ausschließlich Kugelgraphit.

Für solche, hinsichtlich ihrer Abmessungen erreichbaren Preformen in den verschleißfesten Bauteilen, sind die geringen Abmessungen für eine gute Verschleißfestigkeit nicht ausreichend, da die harten Anteile der Bauteile zu schnell abgenutzt sind. Außerdem sind die Infiltrationsergebnisse nicht ausreichend.

Weiter ist ein Verfahren zur spontanen Infiltration von SiC-Preformen mit Fe₃Si-, FesSis- und FeSi-Schmelzen bekannt (Pan, Y. et al: Materials and Engineering A359 (2003), 343-349). Als Ausgangsmaterial werden SiC-Pulver mit einer mittleren Korngröße von 1,6 µm und 0,5 µm eingesetzt. Die Preformen sind mittels Pressen hergestellt worden und haben eine prozentuale Dichte zwischen 50 und 55 %. Die Infiltration erfolgt in einem Ofen bei 1600 °C unter fließendem Argon. Es konnte eine Füllung von 96,5 % der theoretischen Dichte des Verbundmaterials erreicht werden. Nachteilig bei diesem Verfahren ist der zeitaufwändige Prozess, der unter Argonatmosphäre realisiert werden muss und daher kostenaufwändig ist.

Nakae, H., et al: Int. J. of Metalcasting/Spring 11 haben die spontane Infiltration von bei 700 °C gebrannten, wasserglasgebundenen SiC-Preformen mit Al-Si-Mg-Schmelzen unter Zugabe von Eisenoxid in den Wasserglasbinder beschrieben. Genutzt wurden SiC-Pulver mit 420 µm mittlerer Korngröße, wobei auch Mischungen von verschiedenen Korngrößen in den Preformen und den Sandwichs geprüft wurden, um die Infiltrierbarkeit zu erhöhen. Die Preformen wurden auf 900 °C vorgeheizt, mit Argon gespült, sodass keine Luft mehr in den Poren der Preform war und anschließend für 5 min unter Schutzgas (wiederum Argon) in die Aluminiumschmelze getaucht. Ob eine spontane Infiltration stattgefunden kann, hängt von verschiedenen Faktoren ab, wie der Feuchte, der Dicke der Oxidhaut auf der Schmelze, den entstehenden Reaktionsgasen usw. Häufig wurde auch nur eine Teilinfiltration der Preformen erreicht. Aufgrund der aufwändigen Verfahrensweise bei der Verbundwerkstoffherstellung unter Schutzgasen, der ungenügenden Reproduzierbarkeit und der Verwendung einer Aluminiumlegierung ist dieser Prozess auch nicht praxistauglich.

Eine Spontaninfiltration von SiC-Preformen mit einer Hastelloy-Schmelze (Ni-Basislegierung) wird von Qian, Q. et al: J.of Alloys and Compounds 639(2015) 330-335 beschrieben. Als Benetzungsadditiv werden Titan und als Reaktionsbarriere von Keramik und Metall wird Aluminiumoxid als Ausgangsstoffe zugegeben. Das SiC wird mit einer Partikelgröße von 10 µm eingesetzt und die Preformen unter Argonatmosphäre bei 1450 °C mit der 1,5-fachen Menge an Hastelloy belegt. Ohne Aluminiumoxid-Beschichtung löst sich das SiC der Preform bei der Infiltration auf und bildet neue Phasen, welche durch die Beschichtung eingeschränkt, aber nicht gänzlich verhindert wird. Eine vollständige Infiltration der Preform kann ausgeschlossen werden, da der Metallanteil im Vergleich zur Preformgröße deutlich geringer ist.

Nachteilig an diesem Verfahren sind die zahlreichen Reaktionen, die alle durchgeführt werden müssen, um zu einem infiltrierten Bauteil zu gelangen. Insgesamt ist dieses Infiltrationsverfahren schlecht steuerbar und die Reaktionen erfordern eine relativ lange Zeit.

Weiterhin ist bekannt, dass Gusseisenwerkstoffe mit lamellaren Grafitausscheidungen (sogenanntes graues Gusseisen) durch Verteilung und Form der Grafitlamellen sehr ungünstige mechanische Eigenschaften besitzt und daher für viele verschleißende Anwendungen nicht eingesetzt werden kann. Zur Vermeidung der lamellaren Grafitausscheidungen und zur Ausbildung spezieller Gefüge wird das Gusseisen daher vor oder während des Gießens mit Zusatzstoffen geimpft. Beispielsweise wird graues Gusseisen mit Eisensiliziden FeSi (40-80 % Si) und Elementen, wie Mn, Zr, Ba, Al, Bi und Seltenen Erden vor oder während des Abgusses geimpft, um eine gezielte Ausscheidung des Graphits zu erreichen. Auch wird metallurgisches SiC zugegeben, um spezielle Erstarrungsformen des ferritischen Gefüges zu erzielen (Knote, W.: Gießerei-Rundschau 57 (2010) Heft 11/12; VDG-Merkblatt: Impfen von Gusseisenschmelzen, SZ 10, März 1989). Das Impfen kann in Form der Zugabe von Pulvern, kompakten Körpern, als Drähte, oder als Zugabe von Flüssigkeiten, als Ein- oder Mehrfachimpfung und zu verschiedenen Verfahrenszeitpunkten durchgeführt werden. Die Zusatzstoffe sind nach Beendigung des Gusses nicht mehr in ihrer ursprünglichen Form im Guss enthalten, sondern haben sich aufgelöst oder umgewandelt.

Weiter ist nach der US 2010/247840 A1 ein permeabler Ring bekannt, für den ein offenzelliges Siliciumcarbid-Formteil hergestellt wird, welches mit flüssigem Metall infiltriert wird. Dieses Metall-Matrix-Komposit wird für Reib- und Verschleißkomponenten eingesetzt.

Das offenzellige Siliciumcarbid-Formteil wird dabei durch Beschichten eines Schaumes mit einem Schlicker hergestellt, wobei der Schlicker Siliciumcarbidpartikel und Bindemittel enthält, die sich auf der Oberfläche des Schaumes ablagern. Nach dem Ausbrennen des Schaumes und der Sinterung des offenzelligen Siliciumcarbid-Formteiles wird dies in eine Form gelegt und ist nach Einfüllen des flüssigen Metalls und dessen Erstarren von Metall umgeben.

Zusammenfassend ist zu sagen, das die bekannten Bauteile aus Gusseisenverbunden mit Hartstoffen oder aus gegossenen Eisenbasislegierungs-Hartstoff-Verbunden für Anwendungen, bei denen hohe Verschleißfestigkeit erforderlich ist, noch nicht ausreichend schnell, kostengünstig und mit ausreichend hoher Verschleißbeständigkeit hergestellt werden können und vorhanden sind.

Die Aufgabe der vorliegenden Erfindung besteht in der Angabe von Verbundwerkstoffen, die eine sehr hohe Verschleißbeständigkeit aufweisen und in der Angabe eines einfachen und kostengünstigen Verfahrens zu ihrer Herstellung.

Die Aufgabe wird durch die in den Ansprüchen angegebene Erfindung gelöst. Vorteilhafte Ausgestaltungen sind Gegenstand der Unteransprüche.

Die erfindungsgemäßen Verbundwerkstoffe mit sehr hoher Verschleißbeständigkeit bestehen aus einer Gusseisenbasislegierung, in der mindestens bereichsweise Hartstoffpartikel eingelagert sind, wobei die Hartstoffpartikel mindestens teilweise von einer Bindephase umgeben und über die Bindephase mindestens teilweise miteinander verbunden sind, und die Bindephase verschieden von der Gusseisenbasislegierung ist, und in der Gusseisenbasislegierung Ausscheidungen des Kohlenstoff vorhanden sind, wobei lamellenförmige oder lamellare Ausscheidungen des Kohlenstoffs ausschließlich im Bereich der Hartstoffpartikel und/oder der Bindephase um die Hartstoffpartikel in einem maximalen Abstand von der Hartstoffpartikeloberfläche von 10 mm vorhanden sind.

Vorteilhafterweise weisen nur die Bereiche der Verbundwerkstoffe, die einer hohen Verschleißbeanspruchung ausgesetzt sind, Hartstoffpartikel und mindestens teilweise eine Bindephase und lamellenförmige oder lamellare Ausscheidungen von Kohlenstoff auf.

Ebenfalls vorteilhafterweise weist die Gusseisenbasislegierung einen Kohlenstoffgehalt von 1,5 bis 6,67 Ma.-% auf und kann Anteile von Mn, Cr, Ni und/oder Si aufweisen.

Weiterhin vorteilhafterweise weist die Gusseisenbasislegierung neben den lamellenförmigen oder lamellaren Ausscheidungen kugelige und/oder vermiculare Ausscheidungen von Kohlenstoff auf und/oder der Kohlenstoff liegt als Zementit und/oder Carbid gebunden vor.

Und auch vorteilhafterweise sind als Hartstoffpartikel Partikel aus Metallcarbiden und/oder Metallnitriden und/oder Metalloxiden vorteilhafterweise Partikel aus kubischem Bornitrid, Titannitrid, Siliciumnitrid, Siliciumcarbid, Borcarbid, Wolframcarbid, Titancarbid, Aluminiumoxid und/oder Zirconiumoxid vorhanden.

Vorteilhaft ist es auch, wenn die Bindephase eine amorphe Struktur mit kristallinen Anteilen zwischen 20 und 80 % aufweist.

Weiterhin vorteilhaft ist es, wenn eine nichtmetallische Bindephase aus Aluminiumoxid, Zirkonoxid, Titanoxid, Siliciumoxid, Chromoxid, Siliciumcarbid, Borcarbid und/oder deren Mischungen und/oder deren Verbindungen gebildet ist

Ebenfalls vorteilhaft ist es, wenn die metallische Bindephase aus Metallen, aus Mischungen oder Verbindungen/Legierungen von Cobalt, Nickel, Nickel-Chrom und/oder Eisen gebildet ist.

Und auch vorteilhaft ist es, wenn die lamellenförmigen oder lamellaren Ausscheidungen des Kohlenstoff in der Gusseisenbasislegierung mindestens im Bereich der Grenzfläche zwischen Gusseisenbasislegierung und Hartstoffpartikel und/oder zwischen Gusseisenbasislegierung und Bindephase im direkten Kontakt mit den Hartstoffpartikeln angeordnet sind und/oder bis maximal 10 mm von den Hartstoffpartikeln entfernt angeordnet sind, und/oder im Bereich der Hartstoffpartikel und/oder der Bindephase homogen verteilt angeordnet sind.

Von Vorteil ist es auch, wenn die lamellenförmige oder lamellare Ausscheidungen des Kohlenstoffs in der Gusseisenbasislegierung im Bereich der Grenzfläche zwischen Gusseisenbasislegierung und Hartstoffpartikel und/oder zwischen Gusseisenbasislegierung und Bindephase mindestens überwiegend in einem Winkel von 45 bis 90 ° zur jeweiligen Grenzfläche angeordnet vorliegen.

Weiterhin von Vorteil ist es, wenn in dem Bereich, in dem Hartstoffpartikel eingelagert sind, mindestens bereichsweise in der Gusseisenbasislegierung der Anteil an Hartstoffpartikel und Bindephase 20-60 Vol.-% beträgt.

Bei dem erfindungsgemäßen Verfahren zur Herstellung von Verbundwerkstoffen mit sehr hoher Verschleißbeständigkeit werden Hartstoffpartikel mit mindestens einem temporären Binder und Materialien zur Herstellung der Bindephase zu einem porösen netzwerkartigen Grünkörper verarbeitet, nachfolgend der Grünkörper einer Temperaturbehandlung zur Sinterung unterzogen, oder der Grünkörper in eine Gießform eingebracht und einer Vorheizung unterzogen, und nach der Sinterung oder Vorheizung des Grünkörpers mindestens die Hohlräume des entstandenen porösen netzwerkartigen Sinterkörpers oder vorgeheizten Grünkörpers mit einer flüssigen Gusseisenbasislegierung gefüllt und der Verbundwerkstoff abgekühlt.

Vorteilhafterweise werden als Hartstoffpartikel Partikel aus Metallcarbiden und/oder Metallnitriden und/oder Metalloxiden, vorteilhafterweise Partikel aus Bornitrid, Titannitrid, Siliciumnitrid, Siliciumcarbid, Borcarbid, Wolframcarbid, Titancarbid, Aluminiumoxid und/oder Zirconiumoxid eingesetzt.

Weiterhin vorteilhafterweise werden als Materialien zur Herstellung der nichtmetallischen Bindephase Aluminiumoxid, Zirkonoxid, Titanoxid, Siliciumoxid, Aluminiumhydroxid, Kaliumcarbonat, Siliciumcarbid, Borcarbid und/oder Mischungen und/oder Verbindungen davon eingesetzt.

Ebenfalls vorteilhafterweise werden als Materialien zur Herstellung der metallischen Bindephase Metallen, Mischungen oder Verbindungen/Legierungen von Cobalt, Nickel, Nickel-Chrom und/oder Eisen eingesetzt.

Vorteilhaft ist es auch, wenn eine Menge an Materialien zur Herstellung der Bindephase eingesetzt wird, mit der die Hartstoffpartikel mindestens teilweise umhüllt und zu einem netzwerkartigen Grünkörper miteinander verbunden werden.

Weiterhin vorteilhaft ist es, wenn ein poröser netzwerkartiger Grünkörper hergestellt wird, der eine mechanische Festigkeit von 0,2-1 MPa im Dreipunktbiegeversuch gemäß DIN EN ISO 3327 aufweist, oder zumindest eine solche mechanische Festigkeit aufweist, bei der die nachfolgenden Verfahrensschritte ohne teilweise oder vollständige Zerstörung des Grünkörpers realisiert werden können.

Ebenfalls vorteilhaft ist es, wenn ein poröser netzwerkartiger Sinterkörper hergestellt wird, der aus mittels der Materialien zur Herstellung der Bindephase miteinander verbundenen Hartstoffpartikeln besteht.

Und auch vorteilhaft ist es, wenn die Hohlräume des Sinterkörpers und/oder des in der Gießform vorgeheizten Grünkörpers mit flüssigem Gusseisen mindestens teilweise, möglichst vollständig, gefüllt werden.

Erstmals können Verbundwerkstoffe angegeben werden, die eine sehr hohe Verschleißbeständigkeit aufweisen und einfach und kostengünstig herstellbar sind.

Erreicht wird dies durch Verbundwerkstoffe mit sehr hoher Verschleißbeständigkeit, die aus einer Gusseisenbasislegierung bestehen, in die mindestens bereichsweise Hartstoffpartikel eingelagert sind.

Die bereichsweise Einlagerung der Hartstoffpartikel erfolgt innerhalb der Gusseisenbasislegierung und innerhalb eines Bauteiles aus oder mit Anteilen des erfindungsgemäßen Verbundwerkstoffes insbesondere in den Bereichen, die bei ihrem Einsatz mit hohem oder besonders hohem Verschleiß beansprucht werden.

In diesen Bereichen ist eine hohe Anzahl an Hartstoffpartikeln in der Gusseisenbasislegierung erwünscht und liegt vor.

Die Gusseisenbasislegierung der Verbundwerkstoffe weist einen Kohlenstoffgehalt von 1,5 bis 6,67 Ma.-% und/oder Anteile von Mn, Cr, Ni und/oder Si auf und weist neben den erfindungsgemäß ausschließlich im Bereich der Hartstoffpartikel vorhandenen lamellenförmigen oder lamellaren (nachfolgend auch allein lamellenförmig oder lamellar genannt) Ausscheidungen des Kohlenstoffs außerhalb des Bereiches der Hartstoffpartikel kugelige und/oder vermiculare Ausscheidungen von Kohlenstoff auf und/oder der Kohlenstoff kann als Zementit und/oder Carbid gebunden vorliegen. Werkstoffbeispiele für derartige Gusseisenbasislegierungen sind EN-GJS (Gusseisen mit Kugelgraphit EN 1563), GJV (Gusseisen mit Vermiculargraphit EN 16079), Weißes Gusseisen (mit ca. 3%C und12 - 28%Cr: z.B. G-X 260 NiCr 4 2 (Ni-Hard-2) bis G-X 300 CrNiSi 9 5 2 (Ni-Hard-4) DIN 1695), Elektromangan-Hartguss (G-X 120 Mn 13 bis G-X 120 MnCr 132).

Bezüglich der lamellenförmigen oder lamellaren Ausscheidungen des Kohlenstoffs sollen im Rahmen der Erfindung Kohlenstoffausscheidungen verstanden werden, die gemäß DIN EN ISO 945-1:2010-09 grundsätzlich in den Formen I und II vorkommen und in den Anordnungen A und B vorliegen können. Jedoch ist es erfindungsgemäß besonders vorteilhaft, wenn die lamellenförmigen oder lamellaren Ausscheidungen des Kohlenstoffs in der Gusseisenbasislegierung im Bereich der Grenzfläche zwischen Gusseisenbasislegierung und Hartstoffpartikel und/oder zwischen Gusseisenbasislegierung und Bindephase mindestens überwiegend in der Form I in einem Winkel von 45 bis 90 ° zur jeweiligen Grenzfläche angeordnet vorliegen.

Als Hartstoffpartikel können Partikel aus Metallcarbiden und/oder Metallnitriden und/oder Metalloxiden vorteilhafterweise Partikel aus kubischem Bornitrid, Titannitrid, Siliciumnitrid, Siliciumcarbid, Borcarbid, Wolframcarbid, Chromcarbid, Titancarbid, Aluminiumoxid, Titanoxid und/oder Zirconiumoxid oder deren Mischungen oder Verbindungen, z.B. Al2O3-ZrO2, TiCN, SiC-B4C vorhanden sein.

Hartstoffe sind Materialien, die sich durch eine besonders hohe Härte auszeichnen.

Sie können verschieden klassifiziert werden, wobei in metallische Typen, wie Carbide, Boride, Nitride und Silizide, und Nichtmetallverbindungen, wie Diamant, Korund, Siliciumcarbid und -nitrid und Borcarbid unterschieden wird (Kiefer-Benesovsky, Hartstoffe, Springer Verlag GmbH Wien, 1963). Sie werden häufig mit metallischen Bindephasen in Form von Hartmetallen oder über keramische Technologien weiterverarbeitet.

Unter Hartstoffen sollen erfindungsgemäß Materialien verstanden werden, die eine Vickershärte von >= 1300 HV10, vorzugsweise von >= 2000 HV10 aufweisen.

Erfindungsgemäß kommen Hartstoffpartikel zum Einsatz, die keine Hartmetalle sind. Hartmetalle sind Metallmatrix-Verbundwerkstoffe, bei denen Hartstoffe, die als kleine Partikel vorliegen, durch eine Matrix aus Metall zusammengehalten werden. Hergestellt werden Hartmetalle durch Mahlen und Mische der Ausgangspulver, Formgebung und nachfolgende Sinterung unter Druck, so dass ein verdichtetes Material entsteht (Wikipedia, Stichwort Hartmetall).

Die erfindungsgemäß vorhandenen Hartstoffpartikel in der Gusseisenbasislegierung sind dabei mindestens teilweise von einer Bindephase umgeben. Dabei kann es sich um eine nichtmetallische oder eine metallische Bindephase handeln.

Die Hartstoffpartikel weisen vorteilhafterweise eine Korngröße zwischen 1 und 10 mm, vorteilhafterweise in einer engen Korngrößenverteilung auf. Die Hartstoffpartikel können einkristallin oder polykristallin aufgebaut sein, und auch aus Mischungen und/oder Verbindungen der o.g. Stoffe bestehen.

Die nichtmetallische Bindephase kann aus Mischungen oder Verbindungen von Aluminiumoxid, Zirkonoxid, Titanoxid, Chromoxid, Siliciumoxid, Siliciumcarbid, Borcarbid gebildet sein. Dabei kann die nichtmetallische Bindephase sowohl amorphe, als auch kristalline Bestandteile enthalten, wobei der Anteil der kristallinen Bestandteile zwischen 20 und 80 % der nichtmetallischen Bindephase beträgt. Amorphe Bestandteile enthalten geringe Zusätze von Alkali- und/oder Erdalkalielementen und/oder weitere bekannte Glasbildnern, wie Bor.

Die metallische Bindephase kann aus Metallen, aus Mischungen oder Verbindungen/Legierungen von Cobalt, Nickel, Nickel-Chrom und/oder Eisen gebildet sein.

Zur Herstellung des porösen netzwerkartigen Grünkörpers werden die Hartstoffpartikel über die Bindephase mindestens teilweise miteinander verbunden. Damit bilden die Hartstoffpartikel mit der Bindephase ein netzwerkartiges Gebilde, welches auch eine ausreichende mechanische Stabilität für die Handhabung im technischen Herstellungsprozess aufweist.

Die besondere erfindungsgemäße Lösung besteht im Wesentlichen darin, dass die Hartstoffpartikel mit einem temporären Binder, sofern vorhanden, und den Materialien zur Herstellung der Bindephase zu einem porösen netzwerkartigen Grünkörper verarbeitet werden. Dieser Grünkörper weist offene Poren auf, die zwischen den durch Stege mindestens aus den Materialien zur Herstellung einer Bindephase verbundenen Hartstoffpartikeln vorliegen.

Dieser Grünkörper kann dann gesintert werden, wobei die offenzellige poröse Struktur des Netzwerkes während der Sinterung erhalten bleibt. Es ist auch möglich, dass der Grünkörper in eine Gießform für die Herstellung des Verbundwerkstoffes eingebracht und einer Vorheizung unterzogen wird. Dabei erfolgt dann quasi auch die Sinterung des Grünkörpers.

In jedem Fall bleibt die poröse netzwerkartige Struktur des Grünkörpers oder Sinterkörpers erhalten und die vorhandenen Hohlräume des entstandenen porösen netzwerkartigen Sinterkörpers oder vorgeheizten Grünkörpers in Form von offenen Poren des Netzwerkes werden nachfolgend mit einer flüssigen Gusseisenbasislegierung gefüllt und der erfindungsgemäße Verbundwerkstoff liegt nach der Abkühlung vor.

Vorteilhafterweise sind 2 bis 40 Vol.-%, noch vorteilhafterweise 5 bis 20 Vol.-% Bindephase, bezogen auf das Volumen der Hartstoffpartikel im erfindungsgemäßen Verbundwerkstoff enthalten.

Bei den erfindungsgemäßen Verbundwerkstoffen kann in dem Bereich, in dem Hartstoffpartikel eingelagert sind, vorteilhafterweise der Anteil an Hartstoffpartikeln und Bindephase in der Gusseisenbasislegierung 20 - 60 Vol.-% betragen.

Weiterhin ist es erfindungswesentlich, dass in der Gusseisenbasislegierung Ausscheidungen des Kohlenstoff vorhanden sind, wobei lamellenförmige Ausscheidungen des Kohlenstoffs ausschließlich im Bereich der Hartstoffpartikel und/oder der Bindephase um die Hartstoffpartikel in einem maximalen Abstand von der Hartstoffpartikeloberfläche von 10 mm vorhanden sind.

Im Bereich der Hartstoffpartikel und/oder der Bindephase können neben lamellenauch sternförmige Ausscheidungen von Kohlenstoff vorliegen.

Besonders vorteilhaft für die erfindungsgemäße Lösung ist es, wenn die lamellenförmigen Ausscheidungen des Kohlenstoffs in der Gusseisenbasislegierung im Bereich der Hartstoffpartikel und/oder der Bindephase mindestens überwiegend in einem Winkel von 45 bis 90 ° zur Grenzflächen zwischen Gusseisenbasislegierung und Hartstoffpartikel und/oder zwischen Gusseisenbasislegierung und Bindephase angeordnet vorliegen. Dabei kann eine bürstenartige Struktur der lamellaren Ausscheidung des Kohlenstoffs in Bezug auf die Grenzflächen zwischen Gusseisenbasislegierung und Hartstoffpartikel und/oder zwischen Gusseisenbasislegierung und Bindephase vorliegen. Die lamellaren Ausscheidungen des Kohlenstoffs können vereinzelt, in Gruppen, ungeordnet, oder geordnet nebeneinander oder sternförmig angeordnet sein.

Vorteilhafterweise sind die lamellaren Ausscheidungen aus Graphit.

Mit den erfindungsgemäßen Verbundwerkstoffen liegt quasi ein Durchdringungswerkstoff vor, bei dem möglichst alle Hohlräume, Poren und Risse in und um die Hartstoffpartikel und die Bindephase von der Gusseisenbasislegierung ausgefüllt sind. Die Gusseisenbasislegierung kann dabei sogenanntes Gusseisen mit Kugelgrafit oder Vermiculargraphit, Weißes Gusseisen (Nihard, Chromhartguss) oder Manganhartguss sein.

In dem erfindungsgemäßen Verbundwerkstoff und/oder in einem Bauteil mit mindestens Bereichen aus dem erfindungsgemäßen Verbundwerkstoff können auch Bereiche ohne die lamellaren Ausscheidungen des Kohlenstoffs vorliegen. Jedoch ist es erfindungswesentlich, dass dort, wo kein erfindungsgemäßer Verbundwerkstoff in einem Bauteil vorhanden ist, keine lamellaren Ausscheidungen von Kohlenstoff vorhanden sind und auch nicht vorhanden sein dürfen.

In den Bereichen des erfindungsgemäßen Verbundwerkstoffes, in dem sich Hartstoffpartikel und/oder Bindephase befinden, sind immer mindestens lamellare Ausscheidungen des Kohlenstoffs in der Gusseisenbasislegierung vorhanden, jedoch auch nur ausschließlich im Bereich der Hartstoffpartikel und/oder der Bindephase um die Hartstoffpartikel in einem maximalen Abstand von der Hartstoffpartikeloberfläche von 10 mm.

Von besonderer Bedeutung für die erfindungsgemäße Lösung ist es, dass es bei der Herstellung der erfindungsgemäßen Verbundwerkstoffe nicht oder nicht vollständig zu einem Auflösen der Hartstoffpartikel und der Bindephase oder einer chemischen Veränderung oder Umwandlung kommt, sondern die Hartstoffpartikel verbleiben im Wesentlichen oder überwiegend in ihrer ursprünglichen Form und Zusammensetzung erhalten und können somit für die lamellenförmigen Ausscheidungen des Kohlenstoffs quasi als Wachstumskeime dienen. Daher ist die anzahlmäßige größere Anordnung der lamellaren Ausscheidungen auch immer im Bereich der Oberfläche der Hartstoffpartikel und/oder der Grenzfläche der Bindephase zu finden. Das Auflösen der Hartstoffpartikel und der Bindephase wird durch eine Anpassung der Gießbedingungen, insbesondere der Gießtemperatur vermieden, die von einem Fachmann durch wenige Versuche relativ einfach ermittelt werden können. Außerhalb des erfindungsgemäß beschriebenen Bereiches um die Hartstoffpartikel liegen keine lamellenförmigen Ausscheidungen des Kohlenstoffs vor, was durch die bekannten Verfahrensschritte zur Herstellung von lamellenfreiem Gusseisen, wie beispielsweise durch Zusatz von Legierungsbestandteilen, Entschwefelung und Zugabe spezieller Impfmaterialien erreicht werden kann.

Hergestellt werden die erfindungsgemäßen Verbundwerkstoffe mit sehr hoher Verschleißbeständigkeit durch ein Verfahren, bei dem Hartstoffpartikel und Materialien zur Herstellung der Bindephase mit mindestens einem temporären Binder zu einem porösen netzwerkartigen Grünkörper verarbeitet werden. Der temporäre Binder dient der Herstellung des Grünkörpers und bildet nicht die Bindephase aus.

Dazu werden Hartstoffpartikel, die kommerziell erhältlich sind, mit den Materialien zur Herstellung der Bindephase, gemischt, wobei vorteilhafterweise überwiegend Hartstoffpartikel zugegeben werden. Dadurch werden Hartstoffpartikel erhalten, die mindestens teilweise von den Materialien zur Herstellung der metallischen oder nichtmetallischen Bindephase bedeckt und/oder umhüllt sind. Vorteilhafterweise kann aber eine solche Menge an Bindephase eingesetzt werden, dass beispielsweise bis 98 Vol.-% Hartstoffpartikel trotzdem vollständig umhüllt sind.

Als Hartstoffpartikel können Partikel aus Metallcarbiden und/oder Metallnitriden und/oder Metalloxiden vorteilhafterweise Partikel aus kubischem Bornitrid, Titannitrid, Siliciumnitrid, Siliciumcarbid, Borcarbid, Wolframcarbid, Chromcarbid, Titancarbid, Aluminiumoxid, Titanoxid und/oder Zirconiumoxid oder deren Mischungen oder Verbindungen, z.B. Al₂O₃-ZrO₂, TiCN, SiC-B₄C vorhanden sein. Die Hartstoffpartikel weisen eine Vickershärte von >= 1300 HV10 auf, vorzugsweise von >= 2000 HV10 auf.

Die eingesetzten Hartstoffpartikel weisen vorteilhafterweise eine Korngröße zwischen 1 und 10 mm, vorteilhafterweise in einer engen Korngrößenverteilung auf. Die eingesetzten Hartstoffpartikel können einkristallin oder polykristallin aufgebaut sein, und auch aus Mischungen und/oder Verbindungen der o.g. Stoffe bestehen.

Die Hartstoffpartikel in der Gusseisenbasislegierung sind dabei mindestens teilweise von einer Bindephase umgeben. Dabei kann es sich um eine nichtmetallische oder eine metallische Bindephase handeln.

Als Materialien zur Herstellung der nichtmetallischen Bindephase können Aluminiumoxid, Zirkonoxid, Titanoxid, Siliciumoxid, Aluminiumhydroxid, Kaliumcarbonat, Siliciumcarbid, Borcarbid und/oder Mischungen und/oder Verbindungen davon eingesetzt werden.

Als Materialien zur Herstellung der metallischen Bindephase können Metallen, Mischungen oder Verbindungen/Legierungen von Cobalt, Nickel, Nickel-Chrom und/oder Eisen eingesetzt werden.

Als temporäre Binder, die die Hartstoffpartikel und die Materialien zur Herstellung der Bindephase im Grünkörper vor der Sinterung zusammenhalten, werden an sich bekannten Binder für die Herstellung von Hartstoffen, wie Polyvinylalkohole, Polyacrylate, Polysaccharide in einem Gewichtsanteil von 0,5-5,0 Vol.-% bezogen auf den Hartstoff/Bindephase-Mischung verwendet.

Aus der Mischung aus Hartstoffpartikeln, den Materialien zur Herstellung der Bindephase und mindestens einem temporären Binder wird ein poröser netzwerkartiger Grünkörper über ein bekanntes Formgebungsverfahren, wie Schlickergießen, Pressen, Stampfen, Extrudieren, und einem anschließenden Trocknungsschritt bis zu 200 °C an Luft hergestellt.

Um den temporären Binder zu entfernen und eine Festigkeit des Grünkörpers für die Weiterverarbeitung bei höheren Temperaturen zu erreichen, kann einerseits eine Wärmebehandlung des Grünkörpers bei Sintertemperaturen bis zu 2100 °C, an Luft oder Inertgas oder Vakuum, erfolgen, bei der auch die Bindephase um die Hartstoffpartikel und der netzwerkartige poröse Sinterkörper ausgebildet wird. Es kann andererseits aber auch der Grünkörper in eine Gießform eingebracht werden, in die die Gusseisenbasislegierung eingegossen wird. In diesem Fall erfolgt eine Verfestigung und Entfernung des temporären Binders während des notwendigerweise realisierten Aufheizens der Gießform und die endgültige Herstellung des netzwerkartigen porösen Sinterkörpers erfolgt während des Gießvorganges.

Der hergestellte poröse netzwerkartige Grünkörper weist dabei vorteilhafterweise eine mechanische Festigkeit von 0,2 - 1 MPa (Dreipunkt-Biegeversuch) auf, zumindest aber eine solche mechanische Festigkeit, bei der die nachfolgenden Verfahrensschritte ohne teilweise oder vollständige Zerstörung des Grünkörpers realisiert werden können.

Die zugängliche Porosität des hergestellten Grünkörpers kann zwischen 40 und 80 % des Gesamtvolumens betragen.

Durch Steuerung der Einlagerung der Hartstoffpartikel in die Bindephase kann die Porosität des Sinterkörpers auch beeinflusst werden.

Der so hergestellte poröse netzwerkartige Sinterkörper besteht dabei aus mittels der Bindephase miteinander verbundenen Hartstoffpartikeln.

Der hergestellte poröse netzwerkartige Sinterkörper kann weiter einen strukturellen Aufbau aufweisen, der Hohlräume ohne Hartstoffe und Bindephase zeigt. Beispielsweise können Löcher, Durchführungen, Kavitäten in dem Sinterkörper eingebracht oder bei der Grünkörperherstellung erzeugt werden, die nachfolgend nur mit Gusseisenbasislegierung gefüllt sind.

Nach der Herstellung des Sinterkörpers oder des während des Vorheizens der Gussform verfestigten Grünkörpers werden dann die Hohlräume mit flüssiger Gusseisenbasislegierung gefüllt und dann der hergestellte Verbundwerkstoff abgekühlt.

Die Gusseisenbasislegierung kann mittels Schwerkraftguss eingebracht werden. Spezielle druckunterstützte Gussverfahren sind möglich, aber nicht notwendig.

Die Hohlräume des Sinterkörpers oder des während des Vorheizens der Gussform verfestigten Grünkörpers werden mit flüssiger Gusseisenbasislegierung mindestens teilweise, möglichst vollständig, gefüllt. Dabei sollen möglichst alle Hohlräume, Poren, Risse des Verbundwerkstoffes vollständig gefüllt sein.

Von besonderem Vorteil ist es, wenn als Hartstoffpartikel Siliciumcarbidpartikel eingesetzt werden. Siliciumcarbidpartikel wurden bisher nicht als Hartstoffe für Gusseisen-Hartstoff-Verbundwerkstoffe eingesetzt, da die Fachwelt davon ausgegangen ist, dass Siliciumcarbid sich während der Verbundwerkstoffherstellung auflösen oder stark mit dem Gusseisen reagieren wird.

Der eingesetzte nichtmetallische Binder zur Herstellung der Bindephase besteht weiterhin vorteilhafterweise aus Siliciumoxid mit eingelagerten Partikeln aus Aluminiumoxid oder anstelle von Siliciumdioxid aus einer Reaktionsbindung aus Aluminiumhydroxid, Ton und Flussmitteln und als Gusseisen Weißes Gusseisen, welches in den Sinterkörper oder den während des Vorheizens der Gussform verfestigten Grünkörper eingefüllt wird.

Die Herstellung des Grünkörpers erfolgt vorteilhafterweise durch Mischen der Hartstoffpartikel mit den Materialien zur Herstellung der Bindephase und dem temporären Binder und durch Schlickergießen der Mischung zu einem Grünkörper bei Raumtemperatur. Der Grünkörper wird wärmebehandelt, sodass er nach der Sinterung zu einem netzwerkartigen porösen Sinterkörper verarbeitet wird, der anschließend in die Gießform eingesetzt und dann mit flüssiger Gusseisenbasislegierung gefüllt wird. Es ist aber auch möglich den ungesinterten Grünkörper in die Gießform
einzusetzen, die Gießform aufzuheizen und dann die flüssige Gusseisenbasislegierung einzufüllen. Auf beiden Wegen ist die Herstellung der erfindungsgemäßen Verbundwerkstoffe realisierbar.

Bei der Herstellung der Verbundwerkstoffe wird der temporäre Binder während der Sinterung oder der Vorwärmung der Gießform entfernt. Während der Sinterung kommt es zu einer Ausbildung der Bindephase. Die Bindephase im Grünkörper in der Gießform bildet sich während des Gießens aus.

Von besonderer erfindungsgemäßer Bedeutung für das erfindungsgemäße Herstellungsverfahren für die Verbundwerkstoffe ist also, dass ein poröser netzwerkartiger Grünkörper aus Hartstoffpartikeln mit einem temporären Binder, sofern vorhanden, und den Materialien zur Herstellung der Bindephase hergestellt wird, der offene Poren und Stege aufweist.

Dieser poröse netzwerkartige Grünkörper wird innerhalb oder außerhalb der Gießform des Verbundwerkstoffes gesintert und behält dabei ebenfalls seine poröse netzwerkartige Struktur.

Diese poröse netzwerkartige Struktur des Grün-/Sinterkörpers wird dann mit einer flüssigen Gusseisenbasislegierung gefüllt.

Die erfindungsgemäß hergestellten Sinterkörper oder Grünkörper können in unterschiedlichen Größen und Formen hergestellt und in die Gussformen eingepasst werden, die dann mit der Gusseisenbasislegierung gefüllt werden. Dazu werden die Grünkörper, aber vorteilhafterweise auch die Sinterkörper in den Gussformen erwärmt, beispielsweise auf 400 - 800 °C und dann mit der flüssigen Gusseisenbasislegierung gefüllt. Nach dem Abkühlen wird das Formteil aus der Gussform entnommen. Das Formteil beinhaltet den oder besteht dann aus dem erfindungsgemäßen Verbundwerkstoff.

Zur Messung der Eigenschaften wird ein Verschleißteil herangezogen, welches Aussagen über das Werkstoffverhalten ermöglicht, wie sie in Gleitführungen oder bei Zerkleinerungsprozessen mit Druckbeanspruchung und Relativbewegung auftreten. Der Prüfstand besteht aus einem rotierenden Arbeitstisch mit einem Umfang von 1,153m, auf den eine Ringprobe aus Nihard aufgespannt ist. Darüber befindet sich eine seitlich geführte Stahltraverse. An dieser Traverse ist eine Halterung für die Prüfprobe aus dem Verbundmaterial angebracht, von dem vor Versuchsbeginn die genaue Masse ermittelt wird. In den Spalt zwischen der Ringprobe und dem Prüfkörper wird ein abrasiver Zwischenstoff in Form von Quarzsand mit 0,1-0,5 mm mittlerer Partikelgröße gegeben. Durch die Rotation des Arbeitstisches mit einer Umfangsgeschwindigkeit von 0,5 m/s gelangt der Quarzsand zwischen Ringprobe und Prüfkörper. Der Prüfkörper wird über Gewichte mit einer Flächenpressung von 0,5 MPa angepresst. Nach 20-30 km Prüfweg wird der Prüfkörper entnommen, gereinigt und über die Masse der spezifische Verschleißabtrag in mg/km ermittelt. Ein herkömmlicher Nihard-Werkstoff zeigt einen Verschleißabtrag von durchschnittlich 225 mg/km.

Mit den erfindungsgemäßen Verbundwerkstoffen konnte der Verschleißabtrag um durchschnittlich 20 - 40 mg/km verringert werden, was der 10-fachen Verschleißverringerung entspricht.

Diese Verschleißverringerung wird durch die Schmierwirkung der lamellaren Kohlenstoffabscheidungen vor allem um die Hartstoffpartikel bewirkt.

Es wird also eine deutliche Reduzierung des Verschleißes der erfindungsgemäßen Gusseisen-Hartstoff-Verbundwerkstoffe erreicht, was zu einer erheblichen Erhöhung der Standzeit der Bauteile mit den Verbundwerkstoffen führt. Überraschend ist hierbei, dass üblicherweise für Verschleißanwendungen ein kohlenstofflamellenfreies Gusseisen eingesetzt wird, während die erfindungsgemäßen Kohlenstofflamellen im Bereich der Hartstoffe zu einer Verbesserung des Verschleißverhaltens des im übrigen lamellenfreien Gusseisens führen.

Ein weiterer Vorteil ist die hohe Flexibilität bei der Herstellung der Formen durch die Möglichkeiten bei der Grünkörperherstellung, insbesondere hinsichtlich ihrer geometrischen Abmessungen und Ausbildungen, aber auch hinsichtlich der Variabilität der Anordnung der Hartstoffe und der Menge und Art der Hartstoffe im Verbundwerkstoff.

Nachfolgend wird die Erfindung an zwei Ausführungsbeispielen näher erläutert.

### Beispiel 1

Zur Herstellung des Verbundwerkstoffs wird zunächst ein Grünkörper hergestellt.

Zu 500g Siliciumcarbidpulver mit einer FEPA-Körnung F8 mit einer mittleren Korngröße von 2,5 mm werden
+ 25g eines anionischen Silikasoles mit einer Partikelgröße von 35 nm in einer Konzentration von 50% und
+ 45g eines Aluminiumoxidpulvers mit einer mittleren Partikelgröße von 5 µm und einer 96%-igen Reinheit und
+ 5g einer wässrigen Polymerdispersion in einer Konzentration von 60% als temporärer Binder zugegeben.

Die Dispersion wird in einem Behälter mit einem Durchmesser von 150 mm mit einem Propellerrührer des Durchmessers 50 mm bei Drehzahlen von 300 U/min fünf Minuten gemischt.

Diese Mischung wird anschließend in eine rechteckige Form der Maße 100x100x40 mm eingefüllt, in welcher 8 Formen zur Herstellung von zylindrischen Stäben mit einem Durchmesser von 15 mm gleichverteilt angeordnet sind. Die Mischung wird anschließend in der Form in einem Trockenschrank bei 150 °C zwei Stunden getrocknet, aus der Form entnommen. Die so hergestellten Grünkörper werden anschließend an Luft bei 1300 °C mit einer Haltezeit von einer Stunde gebrannt.

Die so hergestellten Sinterkörper werden in eine mit Feuerfeststeinen ausgemauerte Gießform eingesetzt, über die durch die Stäbe entstandenen Löcher mit Schrauben fixiert und gemeinsam mit der Form in einem Ofen auf 600 °C vorgewärmt.

Anschließend wird die Gießform aus dem Ofen entnommen und die Sinterkörper mit einer Schmelze aus weißem Gusseisen EN-GJN-HV600 mit einem C-Gehalt von ca. 3,2 Ma.-% gefüllt. Dabei füllen sich auch alle Poren in den Sinterkörpern und der erfindungsgemäße Verbundwerkstoff mit dem durchdrungenen Gefüge liegt vor. Nach dem Abkühlen wird der Verbundwerkstoff entnommen und kann weiterbearbeitet werden.

Anschließend wird aus dem Verbundwerkstoff jeweils eine Probe der Größe 15x15x15 mm aus dem Bereich des Verbundes mit und ohne keramische Bestandteile entnommen. Diese werden in Harz eingebettet und ein Anschliff zur Gefügebeurteilung präpariert, sowie röntgenographisch auf deren Zusammensetzung untersucht. In der Probe aus dem Verbundwerkstoff mit keramischen Bestandteilen werden in der anschließenden mikroskopischen Untersuchung die ursprünglichen SiC-Partikel festgestellt, die teilweise von keramischer Bindephase aus Al₂O₃ und SiO₂ mit einem kristallinen Anteil von ca. 70% (Mullit) und Reaktionsprodukten aus Eisensilizid umgeben sind. Daran schließt sich das Gusseisen an, welches alle Hohlräume zwischen der Keramik gefüllt hat. Im Gefüge des Gusseisens sind bis zu einem Abstand von ca. 8 mm von den Hartstoffpartikeln entfernt Graphitlamellen erkennbar, welche zum Teil von der Grenzfläche zwischen nichtmetallischer Bindephase und Gusseisen und von der Grenzfläche zwischen SiC-Partikel und Gusseisen aus senkrecht oder in anderen Winkeln gewachsen sind. Der Anteil von Hartstoffpartikeln und Bindephase im Bereich des Verbundwerkstoffes mit keramischen Bestandteilen beträgt 40 Vol.-%.

In der Probe mit nur Gusseisen ohne keramische Bestandteile sind keine oder nur wenige globulare Grafitausscheidungen zu sehen.

Weiterhin werden wiederum zwei Prüfkörper der Maße 25x60 mm aus dem Verbundwerkstoff aus dem Bereich des Verbundes von Gusseisen mit und ohne keramische Bestandteile präpariert und im beschriebenen Verschleißversuch geprüft. Dabei hat die Probe aus nur Gusseisen eine Verschleißrate von 110 mg/kg und die Probe des Verbundmaterials aus Gusseisen mit keramischen Bestandteilen eine Verschleißrate von 25 mg/kg, was einem deutlich verminderten Verschleiß entspricht.

### Beispiel 2:

Zur Herstellung des Verbundwerkstoffs wird zunächst ein Grünkörper hergestellt. Dazu werden zu 300g Korundpulver mit einer FEPA-Körnung F8 mit einer mittleren Korngröße von 2,5 mm
+ 15g eines anionischen Silikasoles mit einer Partikelgröße von 35 nm in einer Konzentration von 50% und
+ 27g eines Siliciumcarbidpulvers mit einer mittleren Partikelgröße mit einer FEPA-Körnung F 1000 mit einer mittleren Korngröße von 4,5 µm und
+ 3g einer wässrigen Polymerdispersion in einer Konzentration von 60% als temporärer Binder
   zugegeben.

Die Dispersion wird in einem Behälter mit einem Durchmesser von 150 mm mit einem Propellerrührer des Durchmessers 50 mm bei Drehzahlen von 300 U/min fünf Minuten gemischt.

Diese Mischung wird anschließend in eine rechteckige Form der Maße 100x60x30 mm eingefüllt, in welcher 4 Formen für zylindrische Stäbe mit einem Durchmesser von 12 mm mit einem Abstand von 10 mm von den Ecken angeordnet sind. Die Mischung wird anschließend in der Form in einem Trockenschrank bei 150 °C zwei Stunden getrocknet und aus der Form entnommen.

Die so hergestellten Grünkörper werden in eine mit Cordieritsteinen ausgemauerte Gießform eingesetzt, über die durch die Stäbe entstandenen Löcher mit Klammern fixiert und gemeinsam mit der Form in einem Ofen auf 800 °C vorgewärmt.

Dabei entsteht ein verfestigter Grünkörper, bei dem der temporäre Binder entfernt ist, jedoch noch keine Bindephase ausgebildet ist.

Anschließend wird die Gießform aus dem Ofen entnommen und mit einer Schmelze aus Gusseisen mit Kugelgrafit EN-GJS-500 (C-Gehalt ca. 3,8 Ma.-%) gefüllt. Dabei füllen sich auch alle Poren des verfestigten Grünkörpers und der erfindungsgemäße Verbundwerkstoff mit dem durchdrungenen Gefüge liegt vor. Nach dem Abkühlen wird der Verbundwerkstoff entnommen und kann weiterbearbeitet werden. Anschließend wird aus dem Verbundwerkstoff jeweils eine Probe der Größe 15x15x15 mm aus dem Bereich des Verbundes mit und ohne keramische Bestandteile entnommen. Diese werden in Harz eingebettet und ein Anschliff zur Gefügebeurteilung präpariert, sowie zur röntgenographischen Untersuchung. In der Probe aus dem Verbundwerkstoff mit keramischen Bestandteilen werden in der anschließenden mikroskopischen Untersuchung die ursprünglichen Korund-Partikel festgestellt, die teilweise von keramischer Bindephase umgeben sind. Die keramische Bindephase besteht aus SiO₂ und SiC, wobei davon insgesamt ca. 60 % kristallin sind. Der Anteil von Hartstoffpartikeln und Bindephase im Bereich des Verbundwerkstoffes mit keramischen Bestandteilen beträgt ca. 50 Vol.-%. Daran schließt sich das Gusseisen an, welches alle Hohlräume zwischen der Keramik gefüllt hat. Im Gefüge des Gusseisens sind Graphitlamellen erkennbar, welche zum Teil von der Grenzfläche zwischen Bindephase und Gusseisen aus senkrecht oder in anderen Winkeln gewachsen sind.

In der Probe mit nur Gusseisen mit Kugelgraphit ohne keramische Bestandteile sind ausschließlich die typischen globularen Grafitausscheidungen zu sehen.

Weiterhin werden wiederum zwei Prüfkörper der Maße 25x60 mm aus dem Verbundwerkstoff aus dem Bereich des Verbundes von Gusseisen mit und ohne keramische Bestandteile präpariert und im beschriebenen Verschleißversuch geprüft. Dabei hat die Probe aus nur Gusseisen eine Verschleißrate von 250 mg/kg und die Probe des Verbundmaterials aus Gusseisen mit keramischen Bestandteilen eine Verschleißrate von 80 mg/kg, was einem deutlich verminderten Verschleiß entspricht.

## Patentansprüche

1. Verbundwerkstoffe mit sehr hoher Verschleißbeständigkeit, die aus einer Gusseisenbasislegierung bestehen, in der mindestens bereichsweise Hartstoffpartikel eingelagert sind, wobei die Hartstoffpartikel mindestens teilweise von einer Bindephase umgeben und über die Bindephase mindestens teilweise miteinander verbunden sind, und die Bindephase verschieden von der Gusseisenbasislegierung ist, und in der Gusseisenbasislegierung Ausscheidungen des Kohlenstoff vorhanden sind, **dadurch gekennzeichnet, dass** lamellenförmige oder lamellare Ausscheidungen des Kohlenstoffs ausschließlich im Bereich der Hartstoffpartikel und/oder der Bindephase um die Hartstoffpartikel in einem maximalen Abstand von der Hartstoffpartikeloberfläche von 10 mm vorhanden sind.

2. Verbundwerkstoffe nach Anspruch 1, bei denen nur die Bereiche der Verbundwerkstoffe, die einer hohen Verschleißbeanspruchung ausgesetzt sind, Hartstoffpartikel und mindestens teilweise eine Bindephase und lamellenförmige oder lamellare Ausscheidungen von Kohlenstoff aufweisen.

3. Verbundwerkstoffe nach Anspruch 1, bei denen die Gusseisenbasislegierung einen Kohlenstoffgehalt von 1,5 bis 6,67 Ma.-% aufweist und Anteile von Mn, Cr, Ni und/oder Si aufweisen kann, und/oder bei denen die Gusseisenbasislegierung neben den lamellenförmigen oder lamellaren Ausscheidungen kugelige und/oder vermiculare Ausscheidungen von Kohlenstoff aufweist und/oder der Kohlenstoff als Zementit und/oder Carbid gebunden vorliegt.

4. Verbundwerkstoffe nach Anspruch 1, bei denen als Hartstoffpartikel Partikel aus Metallcarbiden und/oder Metallnitriden und/oder Metalloxiden vorteilhafterweise Partikel aus kubischem Bornitrid, Titannitrid, Siliciumnitrid, Siliciumcarbid, Borcarbid, Wolframcarbid, Titancarbid, Aluminiumoxid und/oder Zirconiumoxid vorhanden sind.

5. Verbundwerkstoffe nach Anspruch 1, bei denen die Bindephase eine amorphe Struktur mit kristallinen Anteilen zwischen 20 und 80 % aufweist.

6. Verbundwerkstoffe nach Anspruch 1, bei denen eine nichtmetallische Bindephase aus Aluminiumoxid, Zirkonoxid, Titanoxid, Siliciumoxid, Chromoxid, Siliciumcarbid, Borcarbid und/oder deren Mischungen und/oder deren Verbindungen gebildet ist, und/oder bei denen eine metallische Bindephase aus Metallen, aus Mischungen oder Verbindungen/Legierungen von Cobalt, Nickel, Nickel-Chrom und/oder Eisen gebildet ist.

7. Verbundwerkstoffe nach Anspruch 1, bei denen die lamellenförmigen oder lamellaren Ausscheidungen des Kohlenstoff in der Gusseisenbasislegierung mindestens im Bereich der Grenzfläche zwischen Gusseisenbasislegierung und Hartstoffpartikel und/oder zwischen Gusseisenbasislegierung und Bindephase im direkten Kontakt mit den Hartstoffpartikeln angeordnet sind und/oder bis maximal 10 mm von den Hartstoffpartikeln entfernt angeordnet sind, und/oder im Bereich der Hartstoffpartikel und/oder der Bindephase homogen verteilt angeordnet sind, und/oder bei denen die lamellenförmige oder lamellare Ausscheidungen des Kohlenstoffs in der Gusseisenbasislegierung im Bereich der Grenzfläche zwischen Gusseisenbasislegierung und Hartstoffpartikel und/oder zwischen Gusseisenbasislegierung und Bindephase mindestens überwiegend in einem Winkel von 45 bis 90 ° zur jeweiligen Grenzfläche angeordnet vorliegen.

8. Verbundwerkstoffe nach Anspruch 1, bei denen in dem Bereich, in dem Hartstoffpartikel eingelagert sind, mindestens bereichsweise in der Gusseisenbasislegierung der Anteil an Hartstoffpartikel und Bindephase 20-60 Vol.-% beträgt.

9. Verfahren zur Herstellung von Verbundwerkstoffen mit sehr hoher Verschleißbeständigkeit gemäß mindestens einem der Ansprüche 1 bis 8, bei dem Hartstoffpartikel mit mindestens einem temporären Binder und Materialien zur Herstellung der Bindephase zu einem porösen netzwerkartigen Grünkörper verarbeitet werden, nachfolgend der Grünkörper einer Temperaturbehandlung zur Sinterung unterzogen wird, oder der Grünkörper in eine Gießform eingebracht und einer Vorheizung unterzogen wird, und nach der Sinterung oder Vorheizung des Grünkörpers mindestens die Hohlräume des entstandenen porösen netzwerkartigen Sinterkörpers oder vorgeheizten Grünkörpers mit einer flüssigen Gusseisenbasislegierung gefüllt und der Verbundwerkstoff abgekühlt wird.

10. Verfahren nach Anspruch 9, bei dem als Hartstoffpartikel Partikel aus Metallcarbiden und/oder Metallnitriden und/oder Metalloxiden, vorteilhafterweise Partikel aus Bornitrid, Titannitrid, Siliciumnitrid, Siliciumcarbid, Borcarbid, Wolframcarbid, Titancarbid, Aluminiumoxid und/oder Zirconiumoxid eingesetzt werden.

11. Verfahren nach Anspruch 9, bei dem als Materialien zur Herstellung der nichtmetallischen Bindephase Aluminiumoxid, Zirkonoxid, Titanoxid, Siliciumoxid, Aluminiumhydroxid, Kaliumcarbonat, Siliciumcarbid, Borcarbid und/oder Mischungen und/oder Verbindungen davon eingesetzt werden, und/oder bei dem als Materialien zur Herstellung der metallischen Bindephase Metallen, Mischungen oder Verbindungen/Legierungen von Cobalt, Nickel, Nickel-Chrom und/oder Eisen eingesetzt werden.

12. Verfahren nach Anspruch 9, bei dem eine Menge an Materialien zur Herstellung der Bindephase eingesetzt wird, mit der die Hartstoffpartikel mindestens teilweise umhüllt und zu einem netzwerkartigen Grünkörper miteinander verbunden werden.

13. Verfahren nach Anspruch 9, bei dem ein poröser netzwerkartiger Sinterkörper hergestellt wird, der aus mittels der Materialien zur Herstellung der Bindephase miteinander verbundenen Hartstoffpartikeln besteht.

14. Verfahren nach Anspruch 9, bei dem die Hohlräume des Sinterkörpers und/oder des in der Gießform vorgeheizten Grünkörpers mit flüssigem Gusseisen mindestens teilweise, möglichst vollständig, gefüllt werden.

## Claims

1. Composite materials having very high wear resistance and consisting of a cast iron-based alloy incorporating regions at least of hard-substance particles, the hard-substance particles being at least partly surrounded by a binder phase and being at least partly joined to one another via the binder phase, and the binder phase is different from the cast iron-based alloy, and in the cast iron-based alloy there are precipitates of carbon, **characterized in that** lamelliform or lamellar precipitates of carbon are present solely in the region of the hard-substance particles and/or of the binder phase around the hard-substance particles at a maximum distance from the hard-substance particle surface of 10 mm.

2. Composite materials according to Claim 1, wherein only the regions of the composite materials that are subject to high wear stress comprise hard-substance particles and at least partly a binder phase and lamelliform or lamellar precipitates of carbon.

3. Composite materials according to Claim 1, wherein the cast iron-based alloy has a carbon content of 1.5% to 6.67% by mass and may comprise fractions of Mn, Cr, Ni and/or Si, and/or wherein, in addition to the lamelliform or lamellar precipitates, the cast iron-based alloy comprises spherical and/or vermicular precipitates of carbon and/or the carbon is present in bound form as cementite and/or carbide.

4. Composite materials according to Claim 1, wherein hard-substance particles present comprise particles of metal carbides and/or metal nitrides and/or metal oxides, advantageously particles of cubic boron nitride, titanium nitride, silicon nitride, silicon carbide, boron carbide, tungsten carbide, titanium carbide, aluminium oxide and/or zirconium oxide.

5. Composite materials according to Claim 1, wherein the binder phase has an amorphous structure with crystalline fractions of between 20% and 80%.

6. Composite materials according to Claim 1, wherein a non-metallic binder phase composed of aluminium oxide, zirconium oxide, titanium oxide, silicon oxide, chromium oxide, silicon carbide, boron carbide and/or mixtures thereof and/or compounds thereof is formed, and/or wherein a metallic binder phase composed of metals, of mixtures or compounds/alloys of cobalt, nickel, nickel-chromium and/or iron is formed.

7. Composite materials according to Claim 1, wherein the lamelliform or lamellar precipitates of carbon in the cast iron-based alloy are disposed at least in the region of the interface between cast iron-based alloy and hard-substance particles and/or between cast iron-based alloy and binder phase in direct contact with the hard-substance particles and/or are disposed at a distance of not more than 10 mm from the hard-substance particles, and/or are disposed in uniform distribution in the region of the hard-substance particles and/or of the binder phase, and/or wherein the lamelliform or lamellar precipitates of carbon are disposed in the cast iron-based alloy in the region of the interface between cast iron-based alloy and hard-substance particles and/or between cast iron-based alloy and binder phase at least predominantly at an angle of 45 to 90° to the respective interface.

8. Composite materials according to Claim 1, wherein at least regionally in the cast iron-based alloy, in the region incorporating hard-substance particles, the fraction of hard-substance particles and binder phase is 20-60% by volume.

9. Method for producing composite materials having very high wear resistance according to at least one of Claims 1 to 8, wherein hard-substance particles are processed with at least one temporary binder and materials for producing the binder phase to give a porous, network-like green body, after which the green body is subjected to a temperature treatment for sintering, or the green body is introduced into a casting mould and is subjected to preheating, and after the sintering or preheating of the green body, at least the cavities of the resultant porous, network-like sintered body or preheated green body are filled with a liquid cast iron-based alloy and the composite material is cooled.

10. Method according to Claim 9, wherein hard-substance particles used comprise particles of metal carbides and/or metal nitrides and/or metal oxides, advantageously particles of cubic boron nitride, titanium nitride, silicon nitride, silicon carbide, boron carbide, tungsten carbide, titanium carbide, aluminium oxide and/or zirconium oxide.

11. Method according to Claim 9, wherein materials used for producing the non-metallic binder phase comprise aluminium oxide, zirconium oxide, titanium oxide, silicon oxide, aluminium hydroxide, potassium carbonate, silicon carbide, boron carbide and/or mixtures thereof and/or compounds thereof, and/or wherein materials used for producing the metallic binder phase comprise metals, mixtures or compounds/alloys of cobalt, nickel, nickel-chromium and/or iron.

12. Method according to Claim 9, wherein materials for producing the binder phase are used in an amount with which the hard-substance particles are at least partly enveloped and joined to one another to give a network-like green body.

13. Method according to Claim 9, wherein a porous, network-like sintered body is produced which consists of hard-substance particles joined to one another by means of the materials for producing the binder phase.

14. Method according to Claim 9, wherein the cavities of the sintered body and/or of the green body preheated in the casting mould are filled at least partly, as far as possible completely, with liquid cast iron.

## Revendications

1. Matériaux composites ayant une résistance très élevée à l'usure, qui sont constitués d'un alliage à base de fonte, dans laquelle sont incluses au moins par zones des particules de substance dure, les particules de substance dure étant au moins partiellement entourées d'une phase de liaison et étant reliées au moins partiellement les unes aux autres par la phase de liaison, et la phase de liaison étant différente de l'alliage à base de fonte, des précipités de carbone étant présents dans l'alliage à base de fonte, **caractérisés en ce que** des précipités lamellaires ou en forme de lamelles de carbone étant présents exclusivement dans la zone des particules de substance dure et/ou de la phase de liaison autour des particules de substance dure pour une distance maximale avec la surface des particules de substance dure de 10 mm.

2. Matériaux composites selon la revendication 1, dans lesquels seules les zones des matériaux composites qui sont exposées à une forte contrainte d'usure comprennent des particules de substance dure et au moins partiellement une phase de liaison et des précipités, lamellaires ou en forme de lamelles, de carbone.

3. Matériaux composites selon la revendication 1, dans lesquels l'alliage à base de fonte présente une teneur en carbone de 1,5 à 6,67 % en masse, et peut comprendre des proportions de Mn, Cr, Ni et/ou Si, et/ou dans lesquels l'alliage à base de fonte comprend, outre les précipités lamellaires ou en forme de lamelles, des précipités de carbone sphériques et/ou vermiculaires, et/ou le carbone se présentant lié sous forme de cémentite et/ou de carbure.

4. Matériaux composites selon la revendication 1, dans lesquels sont présentes en tant que particules de substance dure des particules de carbures métalliques et/ou de nitrures métalliques et/ou d'oxydes métalliques, de préférence des particules de nitrure de bore cubique, de nitrure de titane, de nitrure de silicium, de carbure de silicium, de carbure de bore, de carbure de tungstène, de carbure de titane, d'oxyde d'aluminium et/ou d'oxyde de zirconium.

5. Matériaux composites selon la revendication 1, dans lesquels la phase de liaison présente une structure amorphe ayant des proportions cristallines entre 20 et 80 %.

6. Matériaux composites selon la revendication 1, dans lesquels une phase de liaison non métallique est formée à partir d'oxyde d'aluminium, d'oxyde de zirconium, d'oxyde de titane, d'oxyde de silicium, d'oxyde de chrome, de carbure de silicium, de carbure de bore et/ou de leurs mélanges et/ou de leurs composés, et/ou dans lesquels une phase de liaison métallique est formée de métaux, de mélanges ou de composés/alliages de cobalt, de nickel, de nickel-chrome et/ou de fer.

7. Matériaux composites selon la revendication 1, dans lesquels les précipités de carbone lamellaires ou en forme de lamelles sont disposés dans l'alliage à base de fonte au moins dans la zone de l'interface entre l'alliage à base de fonte et les particules de substance solide et/ou entre l'alliage à base de fonte et la phase de liaison, en contact direct avec les particules de substance dure, et/ou sont disposés à un maximum de 10 mm des particules de substance dure, et/ou sont disposés répartis dans la zone des particules de substance dure et/ou dans la phase de liaison, et/ou dans lesquels les précipités de carbone lamellaires ou en forme de lamelles se présentent disposés dans l'alliage à base de fonte dans la zone de l'interface entre l'alliage à base de fonte et les particules de substance dure et/ou entre l'alliage à base de fonte et la phase de liaison, au moins essentiellement selon un angle de 45 à 90° par rapport à l'interface considérée.

8. Matériaux composites selon la revendication 1, dans lesquels la proportion des particules de substance dure et de la phase liante est de 20 à 60 % en volume dans la zone dans laquelle sont incluses les particules de substance dure, au moins par zones dans l'alliage à base de fonte.

9. Procédé de fabrication de matériaux composites ayant une résistance à l'usure très élevée selon au moins l'une des revendications 1 à 8, dans lequel on traite des particules de substance dure avec au moins un liant temporaire et des matériaux destinés à la fabrication de la phase liante pour obtenir une ébauche crue poreuse réticulaire, puis on soumet l'ébauche crue à un traitement thermique pour frittage, ou l'ébauche crue est introduite dans un moule et soumise à un préchauffage et, après le frittage ou le préchauffage de l'ébauche crue, au moins les cavités du corps fritté poreux réticulaire obtenu ou de l'ébauche crue préchauffée sont remplies d'un alliage liquide à base de fonte, et on refroidit le matériau composite.

10. Procédé selon la revendication 9, dans lequel on utilise en tant que particules de substance dure des particules de carbures métalliques et/ou de nitrures métalliques et/ou d'oxydes métalliques, de préférence des particules de nitrure de bore, de nitrure de titane, de nitrure de silicium, de carbure de silicium, de carbure de bore, de carbure de tungstène, de carbure de titane, d'oxyde d'aluminium et/ou d'oxyde de zirconium.

11. Procédé selon la revendication 9, dans lequel on utilise en tant que matériaux pour la fabrication de la phase de liaison non métallique de l'oxyde d'aluminium, de l'oxyde de zirconium, de l'oxyde de titane, de l'oxyde de silicium, de l'hydroxyde d'aluminium, du carbonate de calcium, du carbure de silicium, du carbure de bore et/ou des mélanges et/ou des composés de ceux-ci, et/ou dans lequel on utilise comme matériaux de fabrication de la phase de liaison métallique des métaux, des mélanges ou des composés/alliages de cobalt, de nickel, de nickel-chrome et/ou de fer.

12. Procédé selon la revendication 9, dans lequel on utilise une quantité de matériaux de fabrication de la phase de liaison dont les particules de substance dure sont au moins partiellement entourées, et on les relie les uns aux autres pour former une ébauche crue réticulaire.

13. Procédé selon la revendication 9, dans lequel on fabrique un corps fritté réticulaire poreux, qui est constitué de particules de substance dure reliées les unes aux autres à l'aide des matériaux de fabrication de la phase de liaison.

14. Procédé selon la revendication 9, dans lequel les cavités du corps fritté et/ou de l'ébauche crue préchauffée dans le moule sont remplies de fonte liquide au moins partiellement, si possible complètement.
